# EUROPEAN PATENT SPECIFICATION

(11) **EP 0 407 060 B1**
(45) Date of publication and mention of the grant of the patent: **05.02.1997**
(21) Application number: 90306750.2
(22) Date of filing: 20.06.1990
(51) Int. Cl.: G06F 12/14

(54) **Method of providing mandatory secrecy and integrity file security in a computer system**
Verfahren zur Versorgung der Sicherung von Datei-Zwangsheimlichkeit und -Integrität in einem Computersystem
Procédé fournissant une sécurité de fichier dans sa confidentialité obligatoire et dans son intégrité dans un système d'ordinateur

(30) Priority: 30.06.1989 US 374380
(43) Date of publication of application: 09.01.1991
(73) Proprietor: NOVELL, INC., Provo, Utah 84606 (US)
(72) Inventor: Wehr, Larry A., Piscataway, New Jersey 08854 (US)
(74) Representative: Crawford, Andrew Birkby

(56) References cited:
- US-A- 3 916 385
- US-A- 4 926 476
- COMPUTERS & SECURITY, vol. 7, no. 6, December 1988, Oxford, GB, pp 563-573; J.M. CAROLL: 'Implementing multilevel security by violation privilege'
- PROCEEDINGS 1988 IEEE SYMPOSIUM ON SECURITY AND PRIVACY - APRIL 18-21, 1988 - Oakland, CA, US, 1988, New York, US, pp 122-128; J.I. GLASGOW ET AL.: 'Reasoning about knowledge in multilevel secure distributed systems'
- K.J. BIBA 'Integrity considerations for secure computer systems - Technical report ESD-TR-76-372' April 1977, DPTY FOR COMMAND AND MANAGEMENT SYSTEMS - ESD, AFSC, BEDFORD, MA, US; pp 25, 32-35

## Description

### Technical Field

The invention relates to the field of security in computer systems generally and, in particular, to the mandatory control of secure access to files in a computer system by users authorized both according to secrecy and data integriry classifications.

### Background of the Invention

Computer securiry is becoming an increasingly important and urgent issue. As witness to this, consider the present day concern over computer viruses which, if introduced into computer systems, may have the ability to read and/or destroy unprotected data. Indeed, a number of such viral attacks have recently received nationwide attention.

Computer security is an encompassing term. It traditionally includes many aspects of protecting a computer or computer system. Security issues include system access by unauthorized users or programs and limitation of file access to limited users or groups of users based on notions of secrecy. In the last few years, security has also begun to include notions of file access limitations based on perceived integrity, i.e., goodness or validity, of the data stored in the files. The idea of security based on data integrity began with a paper by K. J. Biba in April 1977 entitled "INTEGRITY CONSIDERATIONS FOR SECURE COMPUTER SYSTEMS"; Deputy for Command and Management Systems; Electronic Systems Division, AFSC; Hanscom Air Force Base; Bedford, MA; Technical Report ESD-TR-76-372. At the present time, it is generally recognized that high security systems include elements of both secrecy protection and integrity protection. Secrecy protection is primarily concerned with preventing read access to information by unauthorized users. Integrity protection is concerned primarily with preventing unauthorized modification of the information stored in a computer system. Notwithstanding the differing purposes of secrecy and integrity protection, i.e., observation and modification, respectively, both sets of protection include aspects of observation (reading of data) and modification (writing of data). Without going into unnecessary detail, the rules governing secrecy and integrity are usually stated as follows. For secrecy, a user may not observe (read) data unless the user has a secrecy clearance equal to or greater than that of the data and a user may not modify (write) data unless the user has a secrecy clearance equal to or lower than that of the data. For integrity purposes, the rules are reversed. A user may not modify (write) data unless the user has an integrity clearance equal to or greater than that of the data and a user may not read data unless the user has an integrity clearance equal to or lower than that of the data. In some systems, file writes are prohibited unless the secrecy and/or integrity labels are identical. The rules associated with secrecy insure that data may only be transferred upward in terms of secrecy level. The rules associated with integrity insure that data may only be transferred downward in terms of integrity level.

At the present time, many commercial systems incorporate some degree of secrecy control. However, very few systems incorporate both secrecy and integrity protections. The reason for this is as follows. Although it is well known among artisans in the field that there is a duality between secrecy and integrity, the belief and practice is that the provision of both requires similar, but separate enforcement policies and implementations. That is, that the realization of both secrecy and integrity protections in a single system requires separate labels and separate code for enforcing the security policies, including the testing of the separate secrecy labels and integrity labels on each and every direct and indirect file access in a system. The testing of separate secrecy and integrity labels on every file access, in turn, requires additional overhead in terms of system time to enforce the separate policies of secrecy and integrity. In short, it is presently believed that it is too expensive to implement both security policies in the same system. Thus, of those few systems that include higher levels of protection including integrity and secrecy protections, the higher protections are usually marketed separately at additional cost as optional security packages.

### Summary of the Invention

The invention provides the ability to provide data access security protections based both on secrecy aspects pertaining to data observation and integrity aspects pertaining to the modification of and the perceived goodness of data. This is achieved without additional cost or overhead over conventional techniques that pertain only to protections based only on secrecy aspects. The invention is a method of mandatorily enforcing security protections to insure access to files of a computer system only to computer processes properly authorized for access. A separate security label is associated with each file and process of the system and defines authorized security classes pertaining to the associated file or process. Each security label associated with a process contains information describing authorizations based on data secrecy and data integrity. Similarly, each authorization associated with a file contains information based both on data secrecy and data integrity classes of the processes that are allowed read and write access to the file. A comparison is made on an attempted access of a file by a process of the security label associated with the process and the security label associated with the file. A verification is made based on the comparison that the process is authorized to access the file. Importantly, the verification as to both secrecy and integrity aspects is accomplished in the single verification step.

In one embodiment, the step of verifying follows the rules traditionally associated with data secrecy enforcement, namely, that of verifying on an attempted read access that the security label associated with the reading process dominates the security label associated with the file, and of verifying on an attempted write access that the security label associated with the file dominates the security label associated with the writing process. By dominate, it is meant that the secrecy level of the dominating thing is equal to or greater than that of the dominated thing and that the compartmental clearances for the dominating thing includes at least the set of compartmental clearances for the dominated thing. In the above case, the authorization information in a security label based on integrity is stored as the inverse of the actual integrity information. However, alternative embodiments are equally satisfactory wherein, for example, enforcement is accomplished by verifying on an attempted read access that the security label associated with the file dominates the security label associated with the process, and by verifying on an attempted write access that the security label associated with the process dominates the security label associated with the file. In this case, the authorization information in a security label based on secrecy is stored as the inverse of the actual secrecy information.

In a more generic sense, the invention can be characterized as follows. Each security label comprises a plurality of fields the states of the aggregate of which define a plurality of different sets for processes and files of different security authorizations based on secrecy and integrity. The step of verifying ensures that data flows only to authorized sets on an attempted file access. This is accomplished by verifying that data is allowed to flow from a first set to a second set only when the contents of the security label of the second set is equal to or includes all the authorizations contained in the security label of the first set. In such a case, it may be that, although the security labels include both secrecy and integrity information, it is not necessarily easy or possible to associate separately identifiable parts of a security label with secrecy authorizations and with integrity authorizations.

### Brief Description of the Drawing

In the drawing,
Fig. 1 shows one illustrative format of a secrecy label as used by the federal government, for example, including a secrecy level field and a plurality of secrecy compartments;
Fig. 2 shows an illustrative diagram of different sets of users, processes and data files defined according to the state of the secrecy label of Fig. 1 for each set and the allowed data flow between the set according to the conventional rules pertaining to secrecy security controls;
Fig. 3 shows an illustrative format of an integrity label;
Fig. 4 shows an illustrative diagram of different sets of users, processes and data files defined according to the state of the integrity label of Fig. 3 for each set and the allowed data flow between the set according to the conventional rules pertaining to integrity security controls;
Fig. 5 shows an illustrative single security label that incorporates into the single label both secrecy and integrity information;
Fig. 6 shows the allowed data flow between the sets of Fig. 1 as a result of combining the secrecy protections of Fig. 2 and the integrity protections of Fig. 4 into a single label and by defining and testing the contents of label of processes and files in accordance with an aspect of the invention involving the conventional rules of secrecy data flow;
Fig. 7 shows the data flow equivalence of Fig. 6 obtained by defining and testing the contents of process and file security labels of Fig. 5 in an alternative way involving the conventional rules of integrity data flow; and
Figs. 8, 9 and 10 illustrate another example of a system with defined sets of processes and files, including desired constraints on data flow between the sets, and in which the security labels associated with the different sets include both secrecy and integrity information subsumed into the labels as a whole in such a way as to not necessarily be separately identifiable as secrecy information or integrity information.

### Detailed Description

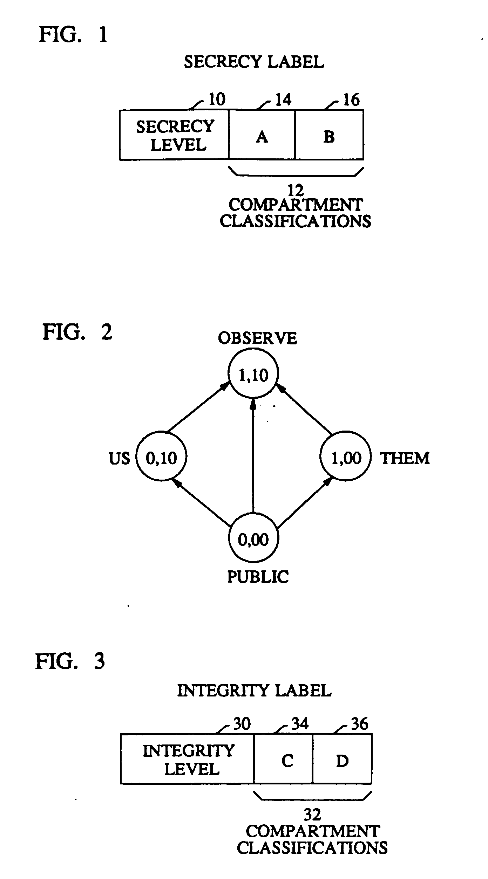

Fig. 1 shows a simplified secrecy label as is typically used by systems that comply with the secrecy requirements set forth in the so- called Federal Government Department of Defense ORANGE book, National Computer Security Center, "Department of Defense Trusted Computer System Evaluation Criteria", DOD 5200.28-STD, December, 1985. One section 10 of the secrecy label sets forth a secrecy level that is associated with a user or with a file. Examples of secrecy levels associated with governmental and other systems include the well known classifications of TOP SECRET, SECRET and UNCLASSIFIED. In nongovernmental systems, these levels can include any classifications that are deemed desirable. Generally, these secrecy levels are binary encoded. For example, TOP SECRET might be encoded as a level 2, whereas UNCLASSIFIED might be encoded as a level 0.

A second section 12 of a secrecy label sets forth a number of different compartments, 14 and 16 in Fig. 1, to which the secrecy level of section 10 applies. As an example, each compartment of 12 might refer to a separate country or to a separate block of countries. There are usually a large number of compartments of 12 in any realistic system. For present purposes, only two compartments A and B, 14 and 16, respectively, are shown for simplicity. The definitions of compartments A and B are irrelevant for present purposes. If it aids understanding, the reader might, for example, consider that A and B refers, respectively, to all noncommunist and communist countries.

Fig. 2 shows an illustrative state diagram of four sets of users, processes and files into which a system administrator might wish to segregate a system for secrecy purposes. The four user sets are illustratively OBSERVE, US, THEM and PUBLIC. For this example, it is assumed that only two secrecy levels, 0 and 1, are required, as indicated by the first digit in each set. The secrecy level is separated from the compartments A and B by a comma in the Fig. Thus, the set US, for example, has a secrecy level of 0 and compartments A,B set to 1,0. The definition of the compartments are unimportant for this discussion. Arrows between the user sets indicate directions of allowed data flow. Data flow between sets is determined by applying the previously stated rules for allowed file reads and writes based on the secrecy labels of files and users or processes representing users. To refresh the reader, the secrecy rules are that a user or process can read a file only if its label dominates that of the file. Conversely, a user or process can write a file only if the file label dominates that of the user or process. In other words, data can only flow upward or within a set in the secrecy label chain. Thus, users and processes in PUBLIC can write files located in OBSERVE, US, THEM and PUBLIC, because the secrecy labels associated with OBSERVE, US, THEM and PUBLIC dominate the secrecy labels of PUBLIC. In addition, users and processes in US and THEM can perform writes to files in OBSERVE for the same reason. Conversely, users and processes in OBSERVE can read data from files located in US, THEM and PUBLIC, because the secrecy labels of processes and users in OBSERVE dominate those of US, THEM and PUBLIC. By dominate, it is meant that the secrecy level of the dominating thing is equal to or greater than that of the dominated thing and that the compartmental clearances for the dominating thing includes at least the set of compartmental clearances for the dominated thing.

Appendix A presents the source code of a program that applies the secrecy rules discussed above to secrecy labels to determine the permissibility of attempted file accesses. The code is written in the familiar C programming language and should be readily understood by anyone familiar with this language.

Fig. 3 illustrates an integrity label that might be used in a system that incorporates integrity enforcement. As seen, the illustrative integrity label is similar to the secrecy label of Fig. 1. An integrity level 30 is the counterpart of the secrecy level 10 of Fig. 1. Integrity levels might be any set of classifications that make sense in a given system. The earlier mentioned Biba publication uses the same integrity level classifications as the governmental secrecy classifications, i.e., TOP SECRET, SECRET and UNCLASSIFIED. For our purposes here, the illustrative integrity classifications HIGH (H), MEDIUM (M) AND LOW (L) are adopted. The integrity label may also contain compartments 32 that correspond in principle to the secrecy compartments of a secrecy label, such as in Fig. 1. Two integrity compartments C and D, 34 and 36, respectively, are shown here. There may be as many integrity compartments as needed in any system. It should also be recognized that, in general, integrity compartments may or may not exist in any system, nor correspond in definition to those of a secrecy label.

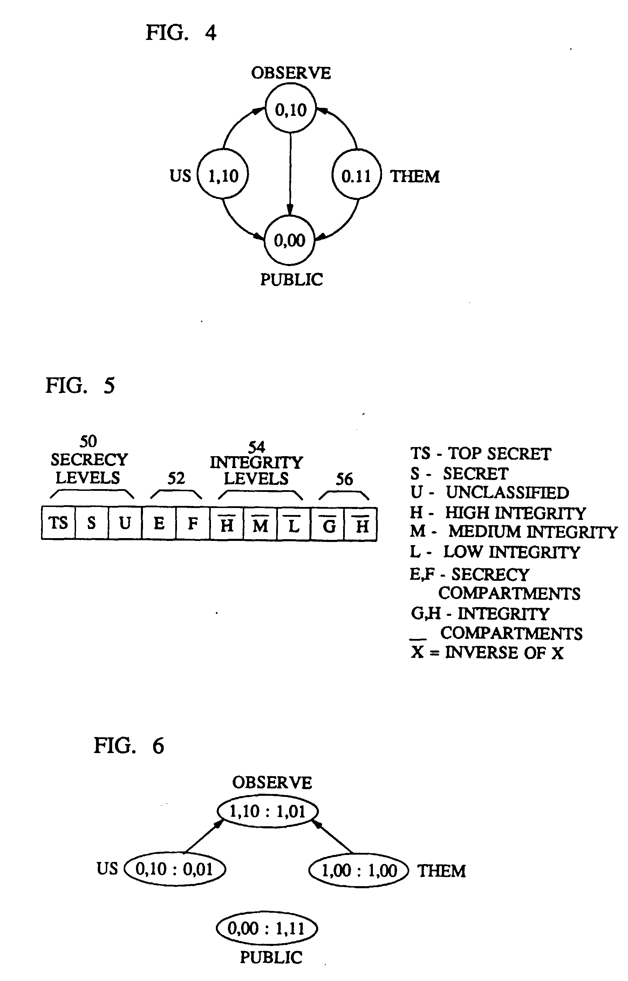

Fig. 4 illustrates one example of constrained data flow based on integrity principles. The integrity labels assigned to each of the sets OBSERVE, US, THEM and PUBLIC reflect the data flow rules priorly mentioned. That is, for integrity purposes, data flows only downward to sets of equal or lower integrity labels. Thus, in this example, users or processes in OBSERVE and PUBLIC can read files in US or THEM. Users in PUBLIC can read files in OBSERVE. However, users or processes in OBSERVE cannot read files in PUBLIC, for example, because to do so would require data flow upward (the C compartment in OBSERVE is higher than the C compartment in PUBLIC). Similarly, users or processes in OBSERVE can write files in PUBLIC, but not in US or THEM.

According to the prior belief and practice, the incorporation of the secrecy and integrity protection features illustrated in Figs. 2 and 4 in a single system requires separate labels, such as those shown in Figs. 1 and 3 and the separate checking of the labels with different code that applies the appropriate data flow rules on every file access performed by the system.

In accordance with the invention, however, both secrecy and integrity protections are achieved in a single step applying only the rules of secrecy or, alternately, the rules of integrity. Thus, both secrecy and integrity protection are provided with a single security label and without system overhead above that required to process a conventional secrecy or integrity label. Fig. 5 shows a single illustrative security label incorporating both secrecy and integrity data. A first section 50 contains secrecy levels. A separate bit is provided for each level TS (TOP SECRET), S (SECRET) and U (UNCLASSIFIED) with a "1", for example, in a bit indicating that the corresponding level is in effect. In this case, all lower secrecy level bits would also contain a "1" to maintain a proper dominance relationship. The provision of a level number as in conventional practice could have been used here. However, the provision of separate secrecy bits is used as a convenience. Two secrecy compartment bits E and F (52) are illustratively provided. The meanings of the two compartments is not important. Similarly, separate bits 54 are provided for specifying integrity levels. For purposes of discussion, these integrity levels are taken to be HIGH INTEGRITY (H), MEDIUM INTEGRITY (M) AND LOW INTEGRITY (L). There is also illustratively shown two integrity compartments G and H (56).

Unlike the case of a separate integrity label as in Fig. 3, the states of the integrity level bits and the integrity compartments are stored in Fig. 5 as inverse states of the actual integrity states. In other words, if a process or file is considered to require high integrity for a compartment G, the actual integrity bit states of H,M,L,G,H (1,1,1,1,0) are stored in the label of Fig. 5 as 0,0,0,0,1 and the data flow rules pertaining to secrecy are applied to this single label for file accesses. As an equally satisfactory alternative, the integrity bit states could be stored as actual values and the states of the secrecy bits 50 and 52 could be stored as their inverse values. In this case, the data flow rules pertaining to integrity would be applied to the single label. Fig. 6 shows allowed data flow between the sets OBSERVE, US, THEM and PUBLIC by combining the secrecy and integrity labels of Figs. 1 and 3 into a single security label with the integrity bits inversed and by applying the data flow rules of secrecy. In this Fig., the secrecy portion of the labels are separated from the integrity portions of the labels by colons, for convenience. Also, the integrity states are inversed as above discussed. Applying the data flow rules of secrecy, i.e., that data only flows upward, results in the direction of the arrows as shown in the Fig. 6. Thus, by combining the secrecy and integrity constraints of Figs. 2 and 4, respectively, the result is that users and processes in OBSERVE are able only to read files having the same label or from US and THEM and users or processes in US and THEM are able only to write files in OBSERVE. Users and processes in PUBLIC are able only to read and write files having security labels identical to that of PUBLIC. All other data accesses are forbidden. Therefore, the users and processes in PUBLIC are isolated from the remainder of the system.

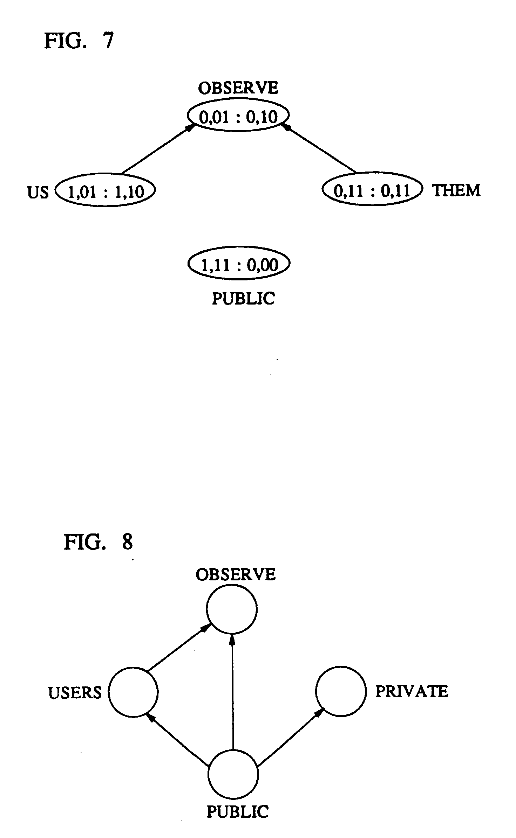

Fig. 7 shows the equivalent system of Fig. 6, except that the secrecy states are inversed, rather than the integrity states, and the data flow rules of integrity, i.e., data flows only downward, are applied to attempted file accesses. As seen, the allowed data flow in Fig. 7 is identical to that of Fig. 6.

It will now be shown that it is possible for any system to incorporate both secrecy and integrity protections in accordance with the principles taught herein, without a system designer or administrator having to explicitly think in terms of secrecy and integrity. It is necessary only that a designer or administrator think in terms of the desired constraints on data flow between different defined system sets of users or processes and sets of files. Once the desired sets are defined and the data flow directions established, the states of security labels are established to insure the desired constraints on data flow between sets by applying either the rules of secrecy or integrity.

Fig. 8 again shows four sets of users, processes and files, OBSERVE, USERS, PRIVATE and PUBLIC, with illustrative constraints on data flow between the sets. With this architecture, users and processes in OBSERVE can read files in USERS and PUBLIC, but they cannot write into USERS or PUBLIC. Users and processes in PRIVATE can read, but not write data in PUBLIC. Similarly, USERS can read, but not write, PUBLIC data. There is complete isolation of USERS from PRIVATE data. If this system were a UNIX operating system, for example, the /etc/passwd file might be assigned to set PUBLIC, but the encrypted passwords would be in a file in set PRIVATE. The trusted operating system would then prevent USERS from reading or writing such sensitive data as the encrypted passwords. An administrator, when performing privileged tasks, would log into the system at set PRIVATE. The system commands required for performing the privileged tasks would be contained in executable files also in set PRIVATE. The same administrator, while working on USER problems, would be logged into the system in set OBSERVE. This would protect administrators from the well known security breaches that can occur when malicious users try to spoof an administrator into executing privileged commands. It is also noteworthy that file access can include direct as well as indirect access, to which the desired data flow rules apply. Using the UNIX operating system again as an example, as far as processes are concerned, devices are merely files to which a security label is attached and, such now well known operators as file indirection (>) and pipes (|) are also indirect file accesses to which the data flow rules are applied.

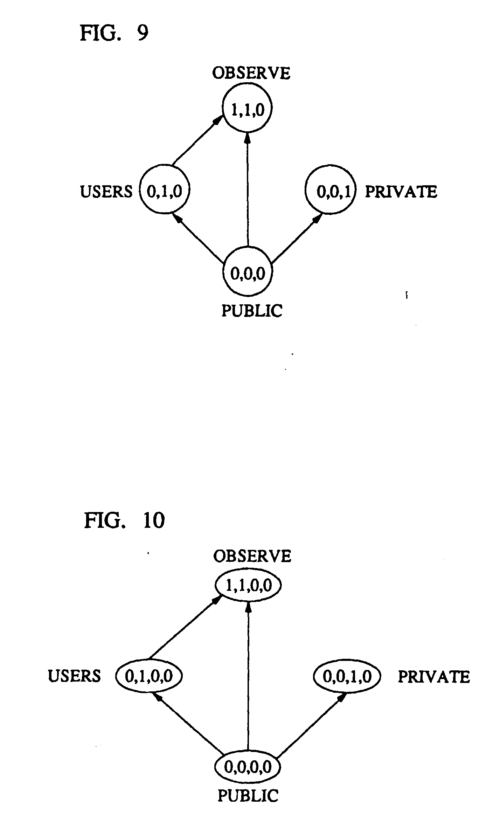

One important thing to note about the system of Fig. 8 is that it includes both protections for secrecy and integrity, that is, it includes all desired constraints on data flow between sets. It is now necessary merely to define security labels for the sets of Fig. 8 to insure that the desired data flow is preserved according to the rules of secrecy or integrity, whichever is chosen to apply. Fig. 9 shows such labels arbitrarily selected according to the rules of secrecy. Fig. 10 shows another different set of labels that accomplishes the same results as the labels of Fig. 9 according to the rules of secrecy. Although the labels of Figs. 9 and 10 both include notions of secrecy and integrity, these notions have been subsumed into the redundant states of the labels and are not necessarily or desirably identifiable as separate bits of the labels. Furthermore, by inverting each label bit in Figs. 9 or 10 and applying the rules of integrity, a designer or administrator can achieve exactly the same result.

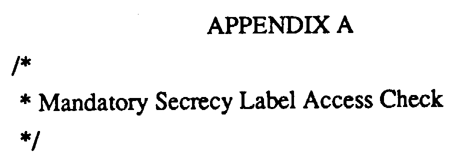

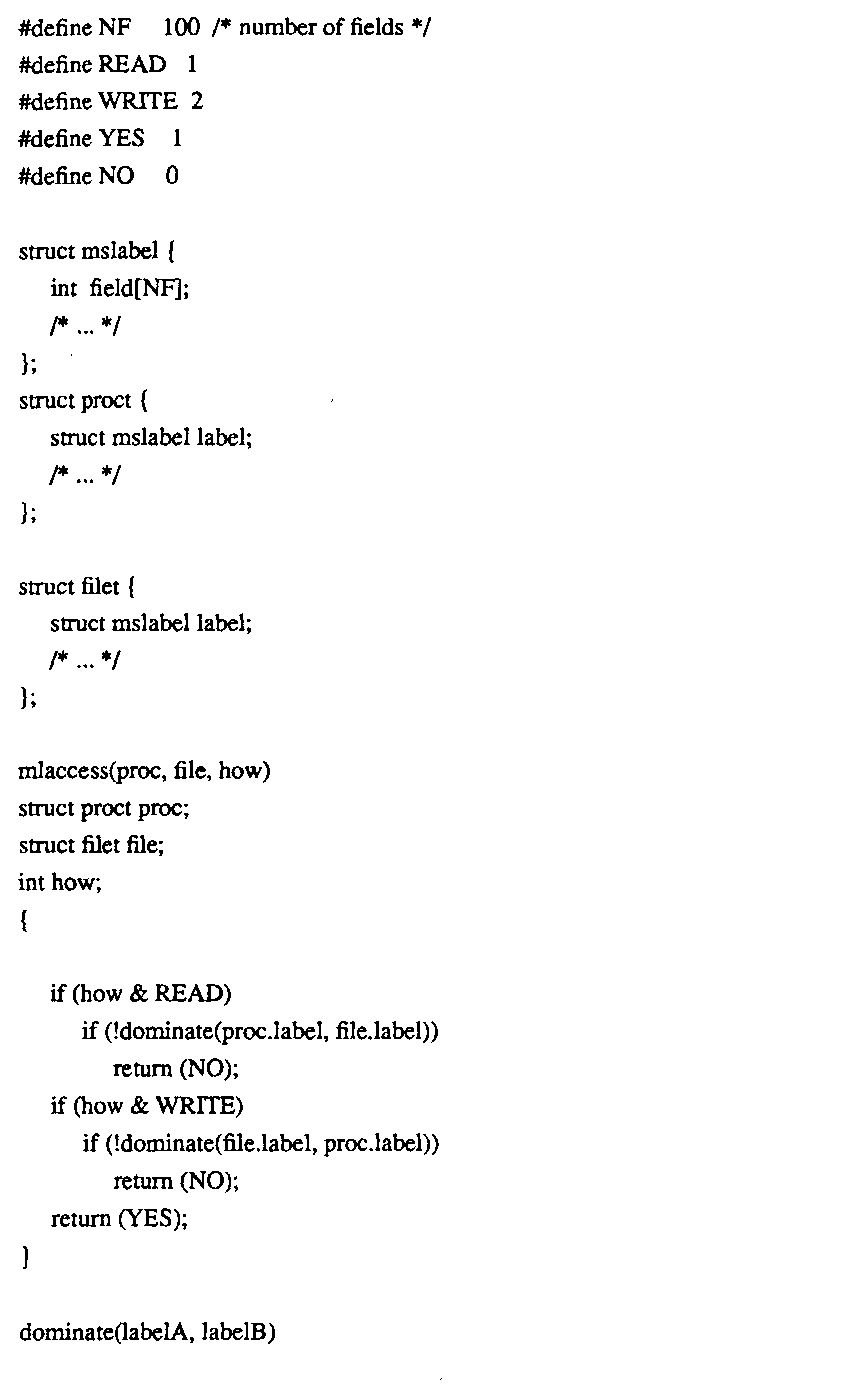

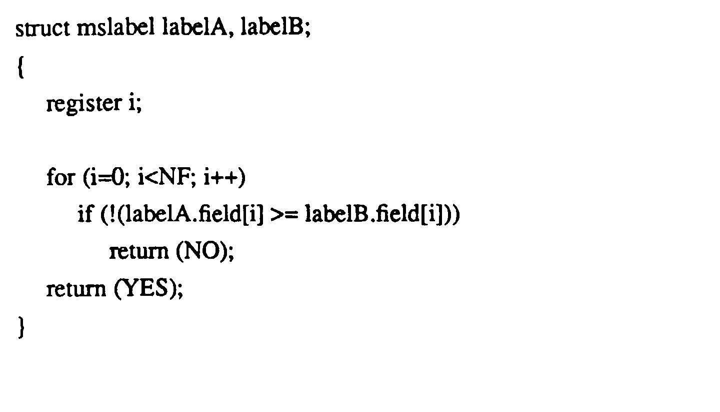

## Claims

1. A method of mandatorily enforcing security protections to insure access to files of a computer system only to computer processes properly authorised for access, in which a separate security label is associated with each file and process of the system and defines authorised security classes pertaining to the associated file or process, the method comprising the steps of
a) verifying on an attempted read access that the security label associated with the process dominates the security label associated with the file, or
b) verifying on an attempted write access that the security label associated with the file dominates the security label associated with the process,
wherein a first security label dominates a second security label when at least all secrecy and integrity authorisations in the second security label are also in the first security label,
said method being characterised in that each security label contains information describing authorisations based on data secrecy and data integrity, the authorisation information in a security label based on integrity being stored as the inverse of the actual integrity information, whereby authorisation based both on the authorised secrecy and integrity classes of the process and that required by the file for access is accomplished in the single verification step.

2. A method of mandatorily enforcing security protections to insure access to files of a computer system only to computer processes properly authorised for access, in which a separate security label is associated with each file and process of the system and defines authorised security classes pertaining to the associated file or process, the method comprising the steps of
a) verifying on an attempted read access that the security label associated with the file dominates the security label associated with the process, or
b) verifying on an attempted write access that the security label associated with the process dominates the security label associated with that file,
wherein a first security label dominates a second security label when at least all secrecy and integrity authorisations in the second security label are also in the first security label,
said method being characterised in that each security label contains information describing authorisations based on data secrecy and data integrity, the authorisation information in a security label based on secrecy being stored as the inverse of the actual security information, whereby authorisation based both on the authorised secrecy and integrity classes of the process and that required by the file for access is accomplished in the single verification step.

## Patentansprüche

1. Verfahren einer erzwungenen Durchsetzung von Sicherheits-Schutzmaßnahmen, um einen Zugriff zu Dateien eines Computerssystems nur auf Computerprozesse sicherzustellen, die geeignet für einen Zugriff autorisiert sind, wobei ein separates Sicherheits-Label jeder Datei und jedem Prozeß des Systems zugeordnet ist und autorisierte Sicherheits-Klassen definiert, die sich auf die zugeordnete Datei oder den zugeordneten Prozeß beziehen, wobei das Verfahren die Schritte aufweist:
a) Verifizieren eines versuchten Lese-Zugriffs, daß das Sicherheits-Label, das dem Prozeß zugeordnet ist, über das Sicherheits-Label, das der Datei zugeordnet ist, dominiert, oder
b) Verifizieren bei einem versuchten Schreib-Zugriff, daß das Sicherheits-Label, das der Datei zugeordnet ist, über das Sicherheits-Label, das dem Prozeß zugeordnet ist, dominiert,
wobei ein erstes Sicherheits-Label über ein zweites Sicherheits-Label dominiert, wenn mindestens alle Geheimhaltungs- und Integritäts-Autorisierungen in dem zweiten Sicherheits-Label auch in dem ersten Sicherheits-Label vorhanden sind,
wobei das Verfahren dadurch gekennzeichnet ist, daß jedes Sicherheits-Label Informationen enthält, die Autorisierungen beschreiben, basierend auf einer Daten-Geheimhaltungs- und Daten-Intergrät, wobei Autorisierungs-Informationen in einem Sicherheits-Label, basierend auf einer Integrität, als das Inverse der tatsächlichen Integritäts-Informationen gespeichert sind, wobei eine Autorisierung basierend sowohl auf autorisierten Geheimhaltungs- als auch Integritäts-Klassen des Prozesses und denenigen, die durch die Datei für einen Zugriff erforderlich sind, in einem einzelnen Verifikationsschritt ausgeführt werden.

2. Verfahren einer erzwungenen Durchsetzung von Sicherheits-Schutzmaßnahmen, um einen Zugriff zu Dateien eines Computersystems nur auf Computerprozesse sicherzustellen, die geeignet für einen Zugriff autorisiert sind, wobei ein separates Sicherheits-Label jeder Dateil und jedem Prozeß des Systems zugeordnet ist und autorisierte Sicherheits-Klassen definiert, die sich auf die zugeordnete Datei oder den zugeordneten Prozeß beziehen, wobei das Verfahren die Schritte aufweist:
a) Verifizieren eines versuchten Lese-Zugriffs, daß das Sicherheits-Label, das der Datei zugeordnet ist, über das Sicherheits-Label, das dem Prozeß zugeordnet ist, dominiert, oder
b) Verifizieren bei einem versuchten Schreib-Zugriff, daß das Sicherheits-Label, das dem Prozeß zugeordnet ist, über das Sicherheits-Label, das der Datei zugeordnet ist, dominiert,
wobei ein erstes Sicherheits-Label über ein zweites Sicherheits-Label dominiert, wenn mindestens alle Geheimhaltungs- und Integritäts-Autorisierungen in dem zweiten Sicherheits-Label auch in dem ersten Sicherheits-Label vorhanden sind,
wobei das Verfahren dadurch gekennzeichnet ist, daß jedes Sicherheits-Label Informationen enthält, die Autorisierungen beschreiben, basierend auf einer Daten-Geheimhaltung- und Daten-Intergrät, wobei Autorisierungs-Informationen in einem Sicherheits-Label, basierend auf einer Geheimhaltung, als das Inverse der tatsächlichen Sicherheits-Informationen gespeichert sind. wobei eine Autorisierung basierend sowohl auf autorisierten Geheimhaltungs- als auch Integritäts-Klassen des Prozesses und denjenigen, die durch die Datei für einen Zugriff erforderlich sind, in einem einzeln Verifikationsschritt ausgeführt werden.

## Revendications

1. Procédé de mise en oeuvre sous mandat de protections de sécurité pour assurer un accès à des fichiers d'un système d'ordinateur seulement pour des processus d'ordinateur dont l'accès est autorisé de manière appropriée, dans lequel une étiquette de sécurité séparée est associée à chaque fichier et processus du système et définit des classes de sécurité autorisées pertinentes pour le fichier ou processus associé, le procédé comprenant les étapes de :
a) vérification, lors d'une tentative d'accès en lecture, du fait que l'étiquette de sécurité associée au processus domine l'étiquette de sécurité associée au fichier ; ou
b) vérification, lors d'une tentative d'accès en écriture, du fait que l'étiquette de sécurité associée au fichier domine l'étiquette de sécurité associée au processus,
dans lequel une première étiquette de sécurité domine une seconde étiquette de sécurité lorsqu'au moins toutes les autorisations de confidentialité et d'intégrité dans la seconde étiquette de sécurité sont également dans la première étiquette de sécurité,
ledit procédé étant caractérisé en ce que chaque étiquette de sécurité contient une information décrivant des autorisations sur la base de la confidentialité des données et de l'intégrité des données, l'information d'autorisation dans une étiquette de sécurité sur la base de l'intégrité étant stockée en tant que l'inverse de l'information d'intégrité réelle de telle sorte qu'une autorisation basée à la fois sur les classes de confidentialité et d'intégrité autorisées du processus et sur celles requises pour l'accès au fichier soit réalisée lors de l'unique étape de vérification.

2. Procédé de mise en oeuvre sous mandat de protections de sécurité pour assurer un accès à des fichiers d'un système d'ordinateur seulement pour des processus d'ordinateur dont l'accès est autorisé de manière appropriée, dans lequel une étiquette de sécurité séparée est associée à chaque fichier et processus du système et définit des classes de sécurité autorisées pertinentes pour le fichier ou processus associé, le procédé comprenant les étapes de :
a) vérification, lors d'une tentative d'accès en lecture, du fait que l'étiquette de sécurité associée au fichier domine l'étiquette de sécurité associée au processus ; ou
b) vérification, lors d'une tentative d'accès en écriture, du fait que l'étiquette de sécurité associée au processus domine l'étiquette de sécurité associée au fichier,
dans lequel une première étiquette de sécurité domine une seconde étiquette de sécurité lorsqu'au moins toutes les autorisations de confidentialité et d'intégrité dans la seconde étiquette de sécurité sont également dans la première étiquette de sécurité,
ledit procédé étant caractérisé en ce que chaque étiquette de sécurité contient une information décrivant des autorisations sur la base de la confidentialité des données et de l'intégrité des données, l'information d'autorisation dans une étiquette de sécurité sur la base de la confidentialité étant stockée en tant que l'inverse de l'information de sécurité réelle de telle sorte qu'une autorisation basée à la fois sur les classes de confidentialité et d'intégrité autorisées du processus et sur celles requises pour l'accès au fichier soit réalisée lors de l'unique étape de vérification.
